# EUROPEAN PATENT SPECIFICATION

(11) **EP 4 452 514 B1**
(45) Date of publication and mention of the grant of the patent: **25.02.2026**
(21) Application number: 22847511.7
(22) Date of filing: 20.12.2022
(51) Int. Cl.: B05B 12/12, B05B 13/00, G01S 17/88, B05D 1/26, B05C 11/06, B05C 5/02, B05D 1/02, B05B 16/00, B05D 3/04, G01B 11/24, G01S 17/89, B05B 12/14, B05B 13/04, G01S 7/481, B05D 3/00

(54) **METHOD AND SYSTEM FOR PAINTING AN OBJECT**
VERFAHREN UND SYSTEM ZUR LACKIERUNG EINES GEGENSTANDS
PROCÉDÉ ET SYSTÈME POUR PEINDRE UN OBJET

(30) Priority: 23.12.2021 US 202163265939 P
(43) Date of publication of application: 30.10.2024
(73) Proprietor: Axalta Coating Systems GmbH, 4057 Basel (CH)
(72) Inventor: ROOP, Robert K., Philadelphia, Pennsylvania 19103 (US); JAWADIWAR, Ashish, Philadelphia, Pennsylvania 19103 (US); CALABRIA, Anthony J., Philadelphia, Pennsylvania 19103 (US); MOORE, John R., Philadelphia, Pennsylvania 19103 (US); CANNING, JR., Robert V., Philadelphia, Pennsylvania 19103 (US); JEFFREY, Bryant C., Philadelphia, Pennsylvania 19103 (US); THIAGARAJAN, Praveen, Philadelphia, Pennsylvania 19103 (US)
(74) Representative: Ingrassia, Fisher & Lorenz UK Ltd.
(86) International application number: PCT/US2022/082051
(87) International publication number: WO 2023/122613

(56) References cited:
- EP-A1- 1 114 677
- CN-A- 110 369 241
- US-A1- 2002 046 699
- US-A1- 2002 124 799
- US-A1- 2015 147 460
- US-B2- 10 577 100

## Description

### CROSS-REFERENCE TO RELATED APPLICATIONS

This application claims priority to and all benefits of U.S. Provisional Application No. 63/265,939, filed December 23, 2021.

### TECHNICAL FIELD

The technical field relates generally to coatings, and more particularly to methods and systems for painting an object with an applicator (e.g., spray gun or other applicator that applies paint) that is operatively coupled to a robot.

### BACKGROUND

A paint booth is a structure that provides a ventilated, air filtered and temperature-controlled environment in which painting of an object can take place. A paint booth is necessary for the safe execution of such activities, since painting includes dispensing paint components such as solvents and particulate material that must not enter the atmosphere in large quantities. As such, the environment within the paint booth is confined and requires a high level of control and expertise. Trained and experienced personnel, which are often hard to find and retain, require specialized personal protection equipment (PPE) to work in such a hazardous, confined space.

Accordingly, it is desirable to provide methods and systems for painting an object that address one or more of the foregoing issues. Furthermore, other desirable features and characteristics of the present disclosure will become apparent from the subsequent detailed description and the appended claims, taken in conjunction with this background.

US 2015/147460 Al discloses an apparatus for painting an object.

### SUMMARY

Methods and systems for robotically painting an object are provided herein. The method includes providing a paint booth. The method further includes providing a scanner-robot arrangement. The scanner-robot arrangement includes a 3-D scanner, a robot, and at least one processor in communication with the 3-D scanner and the robot. The method further includes detecting the object with the 3-D scanner in communication with the at least one processor. An area of the object to be painted is determined with the 3-D scanner in communication with the at least one processor. An applicator is held offset from the area of the object with the robot in communication with the at least one processor. The applicator is in fluid communication with a paint source that contains paint. The method further includes moving the applicator relative to the area of the object with the robot in communication with the at least one processor while depositing the paint from the applicator onto the area of the object. The method further includes the step of moving the object into the paint booth prior to holding and moving the applicator, and wherein holding and moving the applicator comprises holding and moving the applicator with the robot disposed in the paint booth to deposit the paint onto the area of the object, wherein the robot is a movable robot that is configured to move into and out of the paint booth, and wherein the method further comprises the step of moving the movable robot into the paint booth prior to holding and moving the applicator to deposit the paint onto the area of the object.

The system includes a paint booth and a scanner-robot arrangement. The scanner-robot arrangement includes a 3-D scanner configured to scan the object, a robot, and at least one processor in communication with the 3-D scanner and the robot. The 3-D scanner in communication with the at least one processor are cooperatively configured to detect the object and determine an area of the object to be painted. The system further includes an applicator that is configured to be in fluid communication with a paint source that contains paint. The robot in communication with the at least one processor are cooperatively configured to hold the applicator offset from the area of the object and to move the applicator relative to the area of the object while depositing the paint from the applicator onto the area of the object, wherein the robot is a movable robot that is configured to move into and out of the paint booth.

### BRIEF DESCRIPTION OF THE DRAWINGS

The various embodiments will hereinafter be described in conjunction with the following drawing figures, wherein like numerals denote like elements, and wherein:
FIG. 1 illustrates a block diagram of a method for robotically painting an object in accordance with an exemplary embodiment: and
FIG. 2 illustrates a perspective view of an applicator configured as a printhead in accordance with an exemplary embodiment.

### DETAILED DESCRIPTION

The following detailed description is merely exemplary in nature and is not intended to limit the various embodiments or the application and uses thereof. Furthermore, there is no intention to be bound by any theory presented in the preceding background or the following detailed description.

The term "overlying," as used herein, means the overlying material may be physically touching the underlying substrate or layer, or the overlying material may be physically separated from the underlying substrate or layer by an intervening material, such as an overlying clearcoat that may be separated from an underlying substrate or layer (e.g., primer layer) by a basecoat. It is understood that a component or object may be rotated or moved, so reference to one component, object, or item (layer) overlying another refers to a particular orientation, with the understanding that the actual component, object, or item (layer) may be rotated into a different orientation.

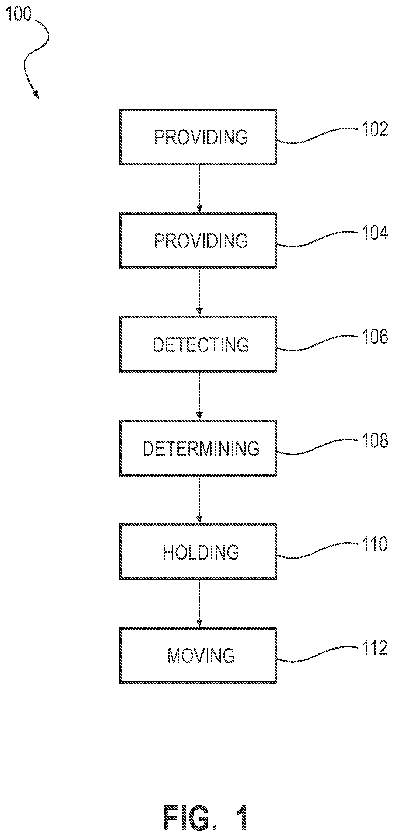

Various embodiments contemplated herein relate to methods and systems for robotically painting an object. Referring to FIG. 1, a method 100 for robotically painting an object in accordance with an exemplary embodiment is provided. The object may be a part, a component for example a vehicle body or trim panel (e.g., an exterior or interior body or trim panel) that may be free standing, mounted on a fixture or on a vehicle, or an assembly of components, for example a vehicle, a portion thereof, or the like.

In an exemplary embodiment, the method 100 includes providing (STEP 102) a paint booth. The paint booth is configured as a structure that provides, for example, a ventilated, air filtered and temperature-controlled environment in which painting of the object can take place. The structure includes an opening or door to allow various objects, components, parts, materials, items, and/or the like to be moved into the paint booth and out of the paint booth as needed or otherwise desired, as well as ingress and egress of personnel.

A scanner-robot arrangement is provided (STEP 104). The scanner-robot arrangement includes a 3-D scanner, a robot, and at least one processor in communication with the 3-D scanner and the robot.

The 3-D scanner is configured to scan the object and generate data that corresponds to the surface (e.g., surface data) and/or 3-D shape of the object (e.g., a portion of or all of the object). In an exemplary embodiment, the at least one processor directs the 3-D scanner to scan the object to generate data. As will be discussed in further detail below, the data is communicated back to the at least one processor for processing to determine the surface, an area(s), or portion(s) of the surface, and/or the 3-D shape of the object, and/or to identify the object. In an exemplary embodiment, the 3-D scanner is a non-contact scanner, such as, for example, an ultra-wide band (UWB) scanner, a camera scanner, a time of flight (TOF) camera, a sonic scanner, a laser scanner, and a light detection and ranging laser (LiDAR) scanner. In one example, the 3-D scanner generates a point cloud as data that corresponds to the 3-D shape of the area of the object. In an alternative embodiment, the 3-D scanner is a contact scanner, for example, a probe that physically contacts the surface along a grid pattern to generate wireframe data that corresponds to the surface and/or 3-D shape of the object. In an exemplary embodiment, the 3-D scanner is a combination of a non-contact scanner and a contact scanner.

In an exemplary embodiment, the robot includes a base and an arm that is disposed on the base and that moves along a plurality of axes. The robot may be, for example, a 3-axis, a 4-axis, a 5-axis, a 6-axis, or a 7-axis robot.

In an exemplary embodiment, the at least one processor is part of a computer. The computer may be used as a device to implement the techniques and methods described herein. The computer may include an input device, such as a keyboard, a mouse, electronic communication devices such as a modem, or a variety of other communication devices. The input device communicates with the at least one processor (processing unit) and/or a memory of the computer, where the processing unit and the memory communicate with each other. A wide variety of processing unit and memory embodiments are known to those skilled in the art. The computer also includes an output device. Other exemplary embodiments of an output device include a modem, a printer, or other components known to those skilled in the art. The methods and techniques described below may be implemented on the computer.

A computer readable medium embodies a computer program that may include one or more algorithms, where the computer program directs the computer to implement the method and techniques described below. The computer readable medium may be an SD card, a USB storage medium, a floppy disk, a CD-ROM, a DVD, a hard drive, or other devices that are readable by a computer, and that include memory for saving the computer program. In some embodiments, the computer program may be electronically downloaded to the computer, but the downloaded computer program is saved on a tangible device somewhere.

In an exemplary embodiment, the 3-D scanner is disposed on the robot, for example on the base of the robot, or alternatively, on the arm of the robot. According to the invention, the robot is a movable robot that is configured to move into and out of the paint booth as needed. In an example, the 3-D scanner is disposed on the base of the robot that is a movable robot and that is in communication with the at least one processor to control movement of the robot and consequently the 3-D scanner for scanning the object. Alternatively, the 3-D scanner may be mounted to the arm of the movable robot, which is in communication with the at least one processor to control movement of the arm and consequently the 3-D scanner for scanning the object.

Alternatively, the 3-D scanner is disposed on a rail-gantry system. The rail-gantry system may be provided inside or outside of the paint booth. The 3-D scanner is operatively coupled to, e.g., movably disposed on, the rail-gantry system, which is in communication with the at least one processor to control movement of the rail-gantry system and consequently the 3-D scanner for scanning the object. In another alternative embodiment, the 3-D scanner is carried by a drone. The drone is movable inside and optionally outside of the paint booth. The 3-D scanner is operatively coupled to, e.g., carried by, the drone, which is in communication with the at least one processor to control movement (e.g., flight, landing, and/or etc.) of the drone and consequently the 3-D scanner for scanning the object.

In an exemplary embodiment, the 3-D scanner, while in communication with the at least one processor, detects (STEP 106) or otherwise finds the object. For example, the object may be moved into the paint booth into a general area. Alternatively, the object may be outside of the paint booth in a general area nearby the paint booth. The 3-D scanner, whether disposed on the robot or a rail-gantry system, scans the general area including the object and communicates the scan data to the at least one processor, which uses the scan data to find the object in the general area including the position and/or orientation of the object.

As discussed above, the at least one processor directs the 3-D scanner to scan and collect surface data of the object, which is communicated back to the at least one processor for processing to determine the surface and/or 3-D shape of the object, and/or to identify the object. Further, the 3-D scanner and the at least one processor cooperate to determine (STEP 108) an area(s) of the object to be painted. For example, the at least one processor is operable to run an algorithm that directs the at least one processor to evaluate the data to determine the 3-D shape of the object. The at least one processor may evaluate the surface data and/or 3-D shape using the algorithm and identify an area(s) or portion(s) of the surface of the object that requires or otherwise needs a paint repair and/or refinishing.

**In** an exemplary embodiment, an identifier is applied (e.g., manually, or otherwise) about the area of the object (e.g., partially or fully surrounding the area that needs a paint repair and/or refinishing) to be painted. Non-limiting examples of identifier include a non-contact sensing device, such as, a radiofrequency identification (RFID) tape, a colored tape, an RFID tag, an ultra-wide band (UWB) device, a color contrasting border, and/or a polygonal border including corners or other tape or border masking materials that can be readily identified by the 3-D scanner in communication with the at least one processor. In an exemplary embodiment, the object is scanned including the identifier with the 3-D scanner and using the positional data of the identifier, the at least on processor determines the area to be painted. For example, the at least one processor may recognize a polygonal shaped RFID tape border and determine that the area positioned inside of the RFID tape border is the area to be painted.

Alternatively, or additionally, the at least one processor may be in communication with and access a database. The database contains, for example, a plurality of various parts/objects including a plurality of corresponding 3-D shapes, areas and/or portions of the surfaces of the various parts/objects, for example unfinished or at least partially unpainted parts/object, which require painting or additional painting. In an exemplary embodiment, the at least one processor matches the surface data and/or 3-D shape to a specific part/object (e.g., matches the surface data/3-D shape to the corresponding 3-D shape of a specific part/object) in the database including the corresponding area to be painted. Further, in an exemplary embodiment, the at least one processor whether using an algorithm and/or a database, determines the specific paint formulation(s) including color and any special effects, and parameters (e.g., process parameters or process specifications including speed, index, offset distance, air pressure, number of coats, flash time, drop generation frequency and/or etc.) to be used to paint the area of the object.

As discussed above, during detection and determination of the area(s) of the object to be painted, the object may be inside or outside of the paint booth. In the case in which the object is located outside of the paint booth, the object is then moved inside the paint booth for painting. In an exemplary embodiment, because the position and/or orientation of the object may have been determined in an area outside of the paint booth, the object is moved and positioned within the paint booth to a predetermined location known to the at least one processor to avoid re-finding and/or re-detecting the object including its position and/or orientation, so that the area of the object can be accurately painted inside the paint booth. Further, if the movable robot is located outside of the paint booth during detection and determination of the area(s) of the object to be painted, the moveable robot is moved into the paint booth prior to painting the object.

In an exemplary embodiment, with both the object and the robot disposed inside the paint booth, the method 100 continues by holding (STEP 110) an applicator offset from the area of the object with the robot (e.g., at the end of arm of the robot) in communication with the at least one processor. In an exemplary embodiment, the applicator is a spray gun, for example in a refinishing paint setting or alternatively, in an industrial painting setting. In another exemplary embodiment, the applicator is a printhead, for example in a refinishing paint setting or alternatively, in an industrial painting setting. In another exemplary embodiment, the applicator is a rotary bell applicator, for example in an industrial painting setting.

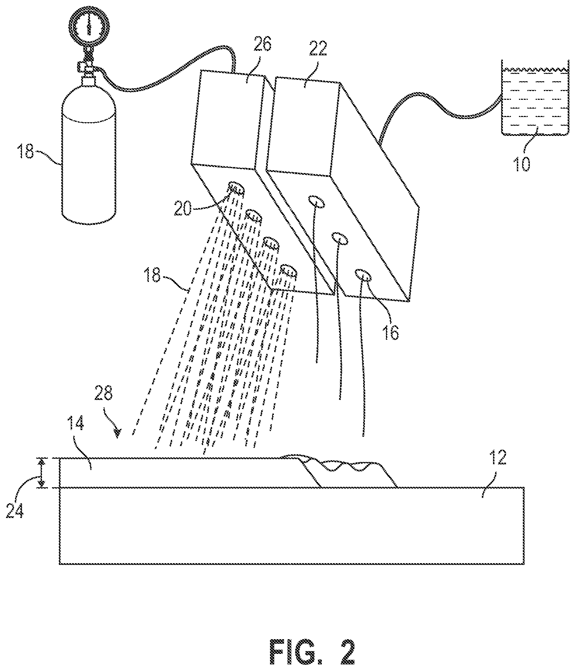

Referring to FIG. 2, when the applicator is a printhead, the applicator may include one or more high transfer efficiency applicators for ejecting the coating composition. The coating composition **10** is ejected from one or more nozzles in an engineered/controlled fashion that creates a fine stream, that may or may not breakup into droplets. The fluid stream is targeted to the substrate **12** such that the jet or drops arrive at specific locations to form a continuous film or pattern on the substrate **12.** As a result, there is essentially no overspray (drops missing their target) and nearly 100% transfer efficiency (essentially all paint goes to targeted location). In an exemplary embodiment, the transfer efficiency of the coating composition that ends up deposited on the substrate **12** is 99.9% or greater. Some allowance should be made for start-up and stopping the high transfer efficiency applicator **16.** Devices of this type have been referred to as drop-on-demand, stream-on demand, overspray-free, or ultrahigh transfer efficiency applicators. The high transfer efficiency applicator **16** stands apart from spray atomization techniques where energy, such as pneumatic, hydraulic, or centrifugal energy, is introduced to create a partially controlled, random distribution of droplet sizes, trajectories, and speeds. Some additional mechanism (electrostatics and or shaping air) may then guide the coating composition **10** droplet cloud to the substrate **12.** In the case of paint spray, there is always some overspray and transfer efficiency loss.

In an exemplary embodiment, the high transfer efficiency applicator **16** is housed in or comprises part of a print head assembly **22 .** The print head assembly **22** may comprise one or more than one high transfer efficiency applicators **16** in different embodiments. The coating composition **10** is pressurized and ejected from the high transfer efficiency applicator **16** toward the substrate **12** to form the coating layer **14** on the substrate **12.** The print head assembly **22** does not touch or make contact with the substrate **12** during application of the coating composition **10,** and, accordingly, remains spatially separate from the substrate **12** during application of the coating layer **14.** The coating layer **14** has a coating layer thickness **24,** and the coating layer thickness **24** may vary over a length and/or width of a coating layer surface **28.** In an exemplary embodiment, the print head assembly **22** is positioned or located at a distance of from 1 to about 30 millimeters from the substrate **12** during application of the coating composition **10.** The print head assembly **22** may be controlled to move over the substrate **12,** making a plurality of subsequent passes to provide the coating layer **14** overlying the substrate **12,** where the coating layer **14** and the substrate **12** may both be wider than the print head assembly **22.** In an alternate embodiment, a plurality of print head assemblies **22** may be utilized to apply the coating layer **14.** In one embodiment, a second applicator **26** may be used to apply fluid **18** (e.g. gas, shaping air) may be applied from a jet **20** onto the surface **28** the coating layer **14.**

Referring to FIG. 1, the applicator is in fluid communication with a paint source that contains paint. The paint formulation may be, for example, a primer formulation, the sealer formulation, a basecoat formulation, a clearcoat formulation, a topcoat formulation, and/or the tint coat formulation. Non-limiting examples of various ingredients that may be present in the paint formulation include one or more types of resins, such as an acrylic resin, an epoxy resin, a polyurethane resin, and/or the like, various additives, promoters, curing agents, a water and/or solvent-based carrier that flashes off during drying or curing of the paint formulation, colorants, pigments, such as effect pigment flakes, interference flakes, colored pigments, and/or the like.

In an exemplary embodiment, the method 100 continues by moving (STEP 112) the applicator relative to the area of the object with the robot (e.g., via moving the arm of the robot) in communication with the at least one processor while depositing (for example, via a spray (e.g., atomized) or a stream, or the like) the paint from the applicator onto the area of the object. In an exemplary embodiment, the applicator is moved over the surface of the area of the object along a path or pattern (e.g., robot path, a spray path, a stream path or the like) to provide complete coverage of the area at a desired coating thickness of the paint.

In an exemplary embodiment, the applicator is a first applicator, the paint source is a first paint source, and the paint is a first coating. The method 100 includes moving the first applicator relative to the area of the object with the robot in communication with the at least one processor while depositing the first coating from the first applicator onto the area of the object. The method 100 continues by optionally allowing the first coating to flash after being deposited onto the area of the object, and by releasing the first applicator from the robot. A second applicator is held offset from the area of the object with the robot in communication with the at least one processor. The second applicator is in fluid communication with a second paint source that contains a second coating. The second applicator is moved relative to the area of the object with the robot in communication with the at least one processor while depositing the second coating from the second applicator onto the area of the object overlying the first coating.

In an exemplary embodiment, the method 100 continues by optionally allowing the second coating to flash after being deposited onto the area of the object and releasing the second applicator from the robot. A third applicator is held offset from the area of the object with the robot in communication with the at least one processor. The third applicator is in fluid communication with a third paint source that contains a third coating. The third applicator is moved relative to the area of the object with the robot in communication with the at least one processor while depositing the third coating from the third applicator onto the area of the object overlying the base coat. In an exemplary embodiment, the third coating is optionally allowed to flash, and the first, second, and third coatings are cured. In an exemplary embodiment, multiple layers of the first coating, the second coating, and independently the third coating may be deposited. Further, in an exemplary embodiment, the first coating, the second coating, and the third coating are independently selected from the group of a primer, the sealer, a basecoat, a clearcoat, a topcoat, and/or the tint coat.

While at least one exemplary embodiment has been presented in the foregoing detailed description of the disclosure, it should be appreciated that a vast number of variations exist. It should also be appreciated that the exemplary embodiment or exemplary embodiments are only examples, and are not intended to limit the scope, applicability, or configuration of the disclosure in any way. Rather, the foregoing detailed description will provide those skilled in the art with a convenient road map for implementing an exemplary embodiment of the disclosure. It is understood that various changes may be made in the function and arrangement of elements described in an exemplary embodiment without departing from the scope of the disclosure as set forth in the appended claims.

## Claims

1. A method for robotically painting an object, the method comprising the steps of:
providing a paint booth;
providing a scanner-robot arrangement that comprises a 3-D scanner, a robot, and at least one processor in communication with the 3-D scanner and the robot;
detecting the object with the 3-D scanner in communication with the at least one processor;
determining an area of the object to be painted with the 3-D scanner in communication with the at least one processor;
holding an applicator offset from the area of the object with the robot in communication with the at least one processor, wherein the applicator is in fluid communication with a paint source that contains paint; and
moving the applicator relative to the area of the object with the robot in communication with the at least one processor while depositing the paint from the applicator onto the area of the object,
and further comprising the step of:
moving the object into the paint booth prior to holding and moving the applicator, and wherein holding and moving the applicator comprises holding and moving the applicator with the robot disposed in the paint booth to deposit the paint onto the area of the object,
wherein the robot is a movable robot that is configured to move into and out of the paint booth, and wherein the method further comprises the step of moving the movable robot into the paint booth prior to holding and moving the applicator to deposit the paint onto the area of the object.

2. The method of claim 1, wherein the 3-D scanner is disposed in the paint booth, wherein moving the object comprises moving the object into the paint booth prior to detecting and determining the area of the object to be painted, and wherein detecting the object comprises locating the object in the paint booth with the 3-D scanner in communication with the at least one processor.

3. The method of claim 1, wherein the 3-D scanner is disposed outside of the paint booth, wherein detecting the object and determining the area of the object to be painted comprises detecting the object and determining the area of the object to be painted with the 3-D scanner in communication with the at least one processor while the object is disposed outside of the paint booth, and wherein moving the object comprises positioning the object at a predetermined location in the paint booth after detecting the object and determining the area of the object to be painted.

4. The method of any one of claims 1-3, wherein the method further comprising the step of providing a drone that is in communication with the at least one processor, and wherein the 3-D scanner is carried by the drone.

5. The method of any one of claims 1-3, further comprising the step of providing a rail-gantry system that is in communication with the at least one processor, and wherein the 3-D scanner is disposed on the rail-gantry system.

6. The method of any one of claims 1-5, wherein: (i) the applicator is a spray gun or a printhead; (ii) the 3-D scanner is disposed on the robot; (iii) the 3-D scanner is a contact scanner, a non-contact scanner, or a combination thereof; or (iv) any combination of (i)-(iii).

7. The method of any one of claims 1-5, wherein the 3-D scanner is a non-contact scanner, wherein the non-contact scanner is one of an ultra-wide band (UWB) scanner, a camera scanner, a time of flight (TOF) camera, a sonic scanner, a laser scanner, and a light detection and ranging laser (LiDAR) scanner.

8. The method of any one of claims 1-7, wherein detecting the object comprises scanning the object with a 3-D scanner to generate data, and wherein determining an area of the object to be painted comprises the at least one processor using the data to determine a 3-D shape of the object.

9. The method of claim 8, wherein: (i) the at least one processor is operable to run an algorithm that directs the at least one processor to evaluate the data to determine the 3-D shape of the object; (ii) the at least one processor is in communication with a database that contains a plurality of parts including a plurality of corresponding 3-D shapes, and wherein the at least one processor searches the database to match the data to one of the plurality of parts to identify the corresponding 3-D shape; (iii) the 3-D scanner generates a point cloud as the data that corresponds to the 3-D shape; or (iv) any combination of (i)-(iii).

10. The method of claim 8, wherein the method further comprises the step of applying an identifier about the area of the object to be painted, wherein detecting the object comprises scanning the object including the identifier with the 3-D scanner, wherein determining the area comprises the at least one processor using the identifier to determine the area to be painted, and wherein the identifier comprises a non-contact sensing device selected from a radiofrequency identification (RFID) tape, a colored tape, an RFID tag, an ultra-wide band (UWB) device, a color contrasting border, a polygonal border including corners, or a combination thereof.

11. The method of any one of claims 1-10, wherein the applicator is a first applicator, the paint source is a first paint source, and the paint is a first coating, and moving the applicator comprises moving the first applicator relative to the area of the object with the robot in communication with the at least one processor while depositing the first coating from the first applicator onto the area of the object, and wherein the method further comprises the steps of:
releasing the first applicator from the robot;
holding a second applicator offset from the area of the object with the robot in communication with the at least one processor, wherein the second applicator is in fluid communication with a second paint source that contains a second coating; and
moving the second applicator relative to the area of the object with the robot in communication with the at least one processor while depositing the second coating from the second applicator onto the area of the object overlying the first coating.

12. The method of claim 11, further comprising the steps of:
releasing the second applicator from the robot;
holding a third applicator offset from the area of the object with the robot in communication with the at least one processor, wherein the third applicator is in fluid communication with a third paint source that contains a third coating; and
moving the third applicator relative to the area of the object with the robot in communication with the at least one processor while depositing the third coating from the third applicator onto the area of the object overlying the second coating.

13. A system for robotically painting an object, the system comprising:
a paint booth
a scanner-robot arrangement comprising:
a 3-D scanner configured to scan the object;
a robot; and
at least one processor in communication with the 3-D scanner and the robot, wherein the 3-D scanner in communication with the at least one processor is cooperatively configured to detect the object and determine an area of the object to be painted; and
an applicator configured to be in fluid communication with a paint source that contains paint, wherein the robot in communication with the at least one processor is cooperatively configured to hold the applicator offset from the area of the object and to move the applicator relative to the area of the object while depositing the paint from the applicator onto the area of the object,
wherein the robot is a movable robot that is configured to move into and out of the paint booth.

## Patentansprüche

1. Verfahren zum robotergestützten Lackieren eines Objekts, wobei das Verfahren die folgenden Schritte umfasst:
Bereitstellen einer Lackierkabine;
Bereitstellen einer Scanner-Roboter-Anordnung, die einen 3-D-Scanner, einen Roboter und mindestens einen Prozessor umfasst, der mit dem 3-D-Scanner und dem Roboter kommuniziert;
Erfassen des Objekts mit dem 3-D-Scanner in Verbindung mit dem mindestens einen Prozessor;
Bestimmen eines Bereichs des zu lackierenden Objekts mit dem 3-D-Scanner in Verbindung mit dem mindestens einen Prozessor;
Halten eines Applikators, der von dem Bereich des Objekts versetzt ist, wobei der Roboter in Kommunikation mit dem mindestens einen Prozessor steht, wobei der Applikator in Fluidkommunikation mit einer Farbquelle steht, die Farbe enthält; und
Bewegen des Applikators relativ zu dem Bereich des Objekts, wobei der Roboter mit dem mindestens einen Prozessor in Verbindung steht, während die Farbe vom Applikator auf den Bereich des Objekts aufgebracht wird,
und umfasst ferner den folgenden Schritt:
Bewegen des Objekts in die Farbkabine vor dem Halten und Bewegen des Applikators, und wobei das Halten und Bewegen des Applikators das Halten und Bewegen des Applikators mit dem in der Farbkabine angeordneten Roboter umfasst, um die Farbe auf den Bereich des Objekts aufzutragen,
wobei der Roboter ein beweglicher Roboter ist, der so konfiguriert ist, dass er sich in die Lackierkabine hinein und aus ihr heraus bewegen kann, und wobei das Verfahren ferner den Schritt umfasst, den beweglichen Roboter in die Lackierkabine zu bewegen, bevor der Applikator gehalten und bewegt wird, um die Farbe auf den Bereich des Objekts aufzutragen.

2. Verfahren nach Anspruch 1, wobei der 3-D-Scanner in der Lackierkabine angeordnet ist, wobei das Bewegen des Objekts das Bewegen des Objekts in die Lackierkabine vor dem Erfassen und Bestimmen des Bereichs des zu lackierenden Objekts, und wobei das Erfassen des Objekts das Lokalisieren des Objekts in der Lackierkabine mit dem 3-D-Scanner in Kommunikation mit dem mindestens einen Prozessor umfasst.

3. Verfahren nach Anspruch 1, wobei der 3-D-Scanner außerhalb der Lackierkabine angeordnet ist, wobei das Erfassen des Objekts und das Bestimmen des Bereichs des zu lackierenden Objekts das Erfassen des Objekts und das Bestimmen des Bereichs des zu lackierenden Objekts mit dem 3-D-Scanner in Kommunikation mit dem mindestens einen Prozessor umfasst, während das Objekt außerhalb der Lackierkabine angeordnet ist, und wobei das Bewegen des Objekts das Positionieren des Objekts an einer vorbestimmten Stelle in der Lackierkabine nach dem Erfassen des Objekts und dem Bestimmen des Bereichs des zu lackierenden Objekts umfasst.

4. Verfahren nach einem der Ansprüche 1 - 3, wobei das Verfahren ferner den Schritt des Bereitstellens einer Drohne umfasst, die mit dem mindestens einen Prozessor in Verbindung steht, und wobei der 3-D-Scanner von der Drohne getragen wird.

5. Verfahren nach einem der Ansprüche 1 - 3, das ferner den Schritt des Bereitstellens eines Schienenportalsystems umfasst, das mit dem mindestens einen Prozessor in Verbindung steht, und bei dem der 3-D-Scanner auf dem Schienenportalsystem angeordnet ist.

6. Verfahren nach einem der Ansprüche 1 - 5, wobei: (i) der Applikator eine Spritzpistole oder ein Druckkopf ist; (ii) der 3-D-Scanner auf dem Roboter angeordnet ist; (iii) der 3-D-Scanner ein Kontaktscanner, ein berührungsloser Scanner oder eine Kombination davon ist; oder (iv) eine beliebige Kombination aus (i) - (iii) ist.

7. Verfahren nach einem der Ansprüche 1 - 5, wobei der 3D-Scanner ein berührungsloser Scanner ist, wobei der berührungslose Scanner einer der folgenden ist: ein Ultrabreitband-Scanner (UWB-Scanner), ein Kamera-Scanner, eine Flugzeitkamera (TOF-Kamera), ein Schall-Scanner, ein Laser-Scanner und ein LiDAR-Scanner (Light Detection and Ranging Laser).

8. Verfahren nach einem der Ansprüche 1 - 7, wobei das Erfassen des Objekts das Abtasten des Objekts mit einem 3-D-Scanner umfasst, um Daten zu erzeugen, und wobei das Bestimmen eines zu lackierenden Bereichs des Objekts umfasst, dass der mindestens eine Prozessor die Daten verwendet, um eine 3-D-Form des Objekts zu bestimmen.

9. Verfahren nach Anspruch 8, wobei: (i) der mindestens eine Prozessor so betreibbar ist, dass er einen Algorithmus ausführt, der den mindestens einen Prozessor anweist, die Daten auszuwerten, um die 3-D-Form des Objekts zu bestimmen; (ii) der mindestens eine Prozessor in Verbindung mit einer Datenbank steht, die eine Vielzahl von Teilen mit einer Vielzahl von entsprechenden 3-D-Formen enthält, und wobei der mindestens eine Prozessor die Datenbank durchsucht, um die Daten mit einem der Vielzahl von Teilen abzugleichen, um die entsprechende 3-D-Form zu identifizieren; (iii) der 3-D-Scanner eine Punktwolke als die Daten erzeugt, die der 3-D-Form entsprechen; oder (iv) eine beliebige Kombination von (i)-(iii).

10. Verfahren nach Anspruch 8, wobei das Verfahren ferner den Schritt des Anbringens eines Bezeichners über dem zu lackierenden Bereich des Objekts umfasst, wobei das Erfassen des Objekts das Abtasten des Objekts einschließlich des Bezeichners mit dem 3D-Scanner umfasst, wobei das Bestimmen des Bereichs umfasst, dass der mindestens eine Prozessor den Bezeichner verwendet, um den zu lackierenden Bereich zu bestimmen, und wobei der Bezeichner eine berührungslose Erfassungsvorrichtung umfasst, die aus einem Radiofrequenz-Identifikations (RFID)-Band, einem farbigen Band, einem RFID-Tag, einer Ultrabreitband (UWB)-Vorrichtung, einer farblich kontrastierenden Umrandung, einer polygonalen Umrandung mit Ecken oder einer Kombination davon ausgewählt ist.

11. Verfahren nach einem der Ansprüche 1 - 10, wobei der Applikator ein erster Applikator ist, die Farbquelle eine erste Farbquelle ist und die Farbe eine erste Beschichtung ist, und das Bewegen des Applikators das Bewegen des ersten Applikators relativ zu dem Bereich des Objekts mit dem Roboter in Kommunikation mit dem mindestens einen Prozessor umfasst, während die erste Beschichtung von dem ersten Applikator auf den Bereich des Objekts aufgebracht wird, und wobei das Verfahren ferner die folgenden Schritte umfasst:
Lösen des ersten Applikators vom Roboter;
Halten eines zweiten Applikators, der von dem Bereich des Objekts versetzt ist, wobei der Roboter mit dem mindestens einen Prozessor in Verbindung steht, wobei der zweite Applikator in Fluidverbindung mit einer zweiten Farbquelle steht, die eine zweite Beschichtung enthält; und
Bewegen des zweiten Applikators relativ zu dem Bereich des Objekts mit dem Roboter in Kommunikation mit dem mindestens einen Prozessor, während die zweite Beschichtung von dem zweiten Applikator auf den Bereich des Objekts aufgebracht wird, der über der ersten Beschichtung liegt.

12. Verfahren nach Anspruch 11, ferner umfassend die folgenden Schritte:
Lösen des zweiten Applikators vom Roboter;
Halten eines dritten Applikators, der von dem Bereich des Objekts versetzt ist, mit dem Roboter in Kommunikation mit dem mindestens einen Prozessor, wobei der dritte Applikator in Fluidkommunikation mit einer dritten Farbquelle steht, die eine dritte Beschichtung enthält; und
Bewegen des dritten Applikators relativ zu dem Bereich des Objekts mit dem Roboter in Kommunikation mit dem mindestens einen Prozessor, während die dritte Beschichtung von dem dritten Applikator auf den Bereich des Objekts aufgebracht wird, der über der zweiten Beschichtung liegt.

13. System zum robotergestützten Lackieren eines Objekts, wobei das System Folgendes umfasst:
eine Lackierkabine
eine Scanner-Roboter-Anordnung mit:
einen 3-D-Scanner, der so konfiguriert ist, dass er das Objekt scannt;
einen Roboter; und
mindestens einen Prozessor, der mit dem 3D-Scanner und dem Roboter in Verbindung steht, wobei der 3D-Scanner, der mit dem mindestens einen Prozessor in Verbindung steht, kooperativ konfiguriert ist, um das Objekt zu erkennen und einen Bereich des zu lackierenden Objekts zu bestimmen; und
ein Applikator, der so konfiguriert ist, dass er in Fluidverbindung mit einer Farbquelle steht, die Farbe enthält, wobei der Roboter, der mit mindestens einem Prozessor in Verbindung steht, gemeinsam so konfiguriert ist, dass er den Applikator versetzt vom Bereich des Objekts hält und den Applikator relativ zur Fläche des Objekts bewegt, während die Farbe vom Applikator auf die Fläche des Objekts aufgebracht wird, wobei der Roboter ein beweglicher Roboter ist, der so konfiguriert ist, dass er sich in die Lackierkabine hinein und aus ihr heraus bewegen kann.

## Revendications

1. Procédé de peinture robotisée d'un objet, le procédé comprenant les étapes consistant à :
fournir une cabine de peinture ;
fournir un agencement scanner-robot comprenant un scanner 3D, un robot et au moins un processeur en communication avec le scanner 3D et le robot ;
détecter l'objet avec le scanner 3D en communication avec au moins un processeur ;
déterminer une zone de l'objet devant être peinte au moyen du scanner 3D en communication avec ledit au moins un processeur ;
maintenir un applicateur à distance de ladite zone de l'objet au moyen du robot en communication avec ledit au moins un processeur, l'applicateur étant en communication fluide avec une source de peinture contenant de la peinture ; et
déplacer l'applicateur par rapport à ladite zone de l'objet au moyen du robot en communication avec ledit au moins un processeur, tout en déposant la peinture issue de l'applicateur sur ladite zone de l'objet ;
le procédé comprenant en outre l'étape consistant à :
déplacer l'objet dans la cabine de peinture avant de tenir et déplacer l'applicateur, dans lequel tenir et déplacer l'applicateur comprend tenir et déplacer l'applicateur avec le robot situé dans la cabine de peinture afin de déposer la peinture sur ladite zone de l'objet,
le robot étant un robot mobile configuré pour entrer dans et sortir de la cabine de peinture, le procédé comprenant en outre l'étape consistant à déplacer le robot mobile dans la cabine de peinture avant de tenir et déplacer l'applicateur pour déposer la peinture sur ladite zone de l'objet.

2. Le procédé selon la revendication 1, dans lequel le scanner 3D est disposé dans la cabine de peinture,
dans lequel déplacer l'objet comprend déplacer l'objet dans la cabine de peinture avant de détecter et déterminer la zone de l'objet devant être peinte, et dans lequel la détection de l'objet comprend localiser l'objet dans la cabine de peinture au moyen du scanner 3D en communication avec ledit au moins un processeur.

3. Le procédé selon la revendication **1,** dans lequel le scanner 3D est disposé à l'extérieur de la cabine de peinture, dans lequel détecter l'objet et déterminer la zone de l'objet devant être peinte comprennent détecter l'objet et déterminer ladite zone au moyen du scanner 3D alors que l'objet est disposé à l'extérieur de la cabine de peinture, et dans lequel déplacer l'objet comprend positionner l'objet à un emplacement prédéterminé dans la cabine de peinture après ladite détection et ladite détermination.

4. Le procédé selon l'une quelconque des revendications 1 à 3, dans lequel le procédé comprend en outre l'étape consistant à fournir un drone en communication avec ledit au moins un processeur, et dans lequel le scanner 3D est transporté par le drone.

5. Le procédé selon l'une quelconque des revendications 1 à 3, comprenant en outre l'étape consistant à fournir un système de portique à rails en communication avec ledit au moins un processeur, et dans lequel le scanner 3D est disposé sur le système de portique à rails.

6. Le procédé selon l'une quelconque des revendications 1 à 5, dans lequel : (i) l'applicateur est un pistolet de pulvérisation ou une tête d'impression ; (ii) le scanner 3D est disposé sur le robot ; (iii) le scanner 3D est un scanner à contact, un scanner sans contact, ou une combinaison des deux ; (iv) ou toute combinaison des éléments (i) à (iii).

7. Le procédé selon l'une quelconque des revendications 1 à 5, dans lequel le scanner 3D est un scanner sans contact, le scanner sans contact étant choisi parmi : un scanner UWB, un scanner à caméra, une caméra temps de vol (TOF), un scanner sonique, un scanner laser, ou un scanner LiDAR.
178.0711EP | Revendications modifiées (161)

8. Le procédé selon l'une quelconque des revendications 1 à 7, dans lequel la détection de l'objet comprend balayer (scanner) l'objet au moyen d'un scanner 3D pour générer des données, et dans lequel la détermination d'une zone de l'objet à peindre comprend utiliser, par ledit au moins un processeur, lesdites données pour déterminer une forme 3D de l'objet.

9. Procédé selon la revendication 8, dans lequel : (i) ledit au moins un processeur est apte à exécuter un algorithme lui permettant d'évaluer les données afin de déterminer la forme 3D de l'objet ; (ii) ledit au moins un processeur est en communication avec une base de données contenant une pluralité de pièces ainsi qu'une pluralité de formes 3D correspondantes, et dans lequel le processeur recherche dans la base de données pour associer les données à l'une des pièces afin d'identifier la forme 3D correspondante ; (iii) le scanner 3D génère un nuage de points constituant les données correspondant à la forme 3D ; (iv) ou toute combinaison des éléments (i) à (iii).

10. Le procédé selon la revendication 8, comprenant en outre l'étape consistant à appliquer un identifiant autour de la zone de l'objet devant être peinte, dans lequel la détection de l'objet comprend scanner l'objet, y compris l'identifiant, au moyen du scanner 3D, dans lequel la détermination de ladite zone comprend l'utilisation, par ledit au moins un processeur, de l'identifiant pour déterminer ladite zone, et dans lequel l'identifiant comprend un dispositif de détection sans contact choisi parmi un ruban RFID, un ruban coloré, une étiquette RFID, un dispositif UWB, une bordure à contraste de couleur, une bordure polygonale comprenant des angles, ou une combinaison de ceux-ci.

11. Le procédé selon l'une quelconque des revendications 1 à 10, dans lequel l'applicateur est un premier applicateur, la source de peinture est une première source de peinture, et la peinture constitue un premier revêtement, et dans lequel le déplacement de l'applicateur comprend de déplacer le premier applicateur par rapport à ladite zone de l'objet avec le robot en communication avec ledit au moins un processeur tout en déposant le premier revêtement sur la zone de l'objet, le procédé comprenant en outre les étapes suivantes :
libérer le premier applicateur du robot ;
maintenir un second applicateur à distance de ladite zone de l'objet au moyen du robot en communication avec ledit au moins un processeur, le second applicateur étant en communication fluide avec une seconde source de peinture contenant un second revêtement ; et
déplacer le second applicateur par rapport à ladite zone de l'objet au moyen du robot en communication avec ledit au moins un processeur tout en déposant le second revêtement du second applicateur sur ladite zone de l'objet, en recouvrement du premier revêtement.

12. Le procédé selon la revendication 11, comprenant en outre les étapes suivantes :
libérer le second applicateur du robot ;
maintenir un troisième applicateur à distance de ladite zone de l'objet au moyen du robot en communication avec ledit au moins un processeur, le troisième applicateur étant en communication fluide avec une troisième source de peinture contenant un troisième revêtement ; et
déplacer le troisième applicateur par rapport à ladite zone de l'objet au moyen du robot en communication avec ledit au moins un processeur tout en déposant le troisième revêtement du troisième applicateur sur ladite zone de l'objet, en recouvrement du second revêtement.

13. Système pour peindre robotiquement un objet, le système comprenant :
une cabine de peinture ;
un agencement scanner-robot comprenant :
un scanner 3D configuré pour scanner l'objet ;
un robot ; et
au moins un processeur en communication avec le scanner 3D et le robot, dans lequel le scanner 3D en communication avec ledit au moins un processeur est configuré de manière coopérative pour détecter l'objet et déterminer une zone de l'objet à peindre ; et
le système comprenant en outre un applicateur configuré pour être en communication fluide avec une source de peinture contenant de la peinture, dans lequel le robot, en communication avec ledit au moins un processeur, est configuré de manière coopérative pour maintenir l'applicateur décalé par rapport à ladite zone de l'objet et déplacer l'applicateur par rapport à ladite zone tout en déposant la peinture sur celle-ci ;
le robot étant un robot mobile configuré pour entrer dans et sortir de la cabine de peinture.
